**Europäisches Patentamt**

**European Patent Office**

**Office européen des brevets**

(19)

(11) Veröffentlichungsnummer : **0 326 793 B1**

(12)

# EUROPÄISCHE PATENTSCHRIFT

(45) Veröffentlichungstag der Patentschrift :
**08.04.92 Patentblatt 92/15**

(51) Int. Cl.$^5$ : **E01B 29/46**

(21) Anmeldenummer : **88890021.4**

(22) Anmeldetag : **01.02.88**

(54) **Elektrische Abbrennstumpf-Schweissmaschine zum Verschweissen der beiden aneinanderstossenden Enden, insbesondere im Stossbereich eines Schienenstranges eines verlegten Gleises.**

(43) Veröffentlichungstag der Anmeldung :
**09.08.89 Patentblatt 89/32**

(45) Bekanntmachung des Hinweises auf die
Patenterteilung :
**08.04.92 Patentblatt 92/15**

(84) Benannte Vertragsstaaten :
**AT CH DE ES FR GB IT LI NL SE**

(56) Entgegenhaltungen :
**EP-A- 0 132 227**
**GB-A- 2 000 829**

(73) Patentinhaber : **Franz Plasser Bahnbaumaschinen- Industriegesellschaft m.b.H.**
**Johannesgasse 3**
**A-1010 Wien (AT)**

(72) Erfinder : **Theurer, Josef**
**Johannesgasse 3**
**A-1010 Wien (AT)**
Erfinder : **Oellerer, Friedrich, Dipl.-Kfm.**
**Nöbauerstrasse 71**
**A-4040 Linz (AT)**
Erfinder : **Gruber, Leopold Rudolf**
**Alpenlandhof No. 1**
**A-3270 Scheibbs (AT)**

EP 0 326 793 B1

**Beschreibung**

Die Erfindung betrifft eine fahrbare Maschine zum elektrischen Abbrennstumpf-Verschweißen der beiden Enden im Verlauf oder im Stoßbereich von in Längsrichtung aneinandergereihten und verlegten Schienen eines Gleises, mit an einem, über Fahrwerke abgestützten Fahrgestellrahmen der Maschine angeordnetem Antriebsmotor, Hydraulik-Pumpenaggregat, Generator, Fahrantrieb und Schweißprozeß-Steuereinrichtung und einem zur Bearbeitung des linken oder rechten Schienenstranges über Antriebe quer- und höhenverstellbaren elektrischen Abbrennstumpf-Schweißaggregat, dessen beide mittels Hydraulik-Zylinder in Schienenlängsrichtung zueinander bewegbare Aggregat-Hälften jeweils ein - über hydraulische Klemm-Zylinder verbundenes - elektrisch/hydraulisch beaufschlagbares Klemm- und Schweißbacken-Paar aufweisen, sowie gegebenenfalls mit einer im Schweißaggregat integrierten, hydraulisch beaufschlagbaren Schweißwulst-Abschervorrichtung.

Eine bekannte, von der gleichen Anmelderin entwickelte fahrbare elektrische Abbrennstumpf-Schweißmaschine - gemäß dem Plasser & Theurer-Prospekt K 355 APT vom Februar 1986 - weist einen auf Fahrwerken abgestützten und über einen Fahrantrieb selbstverfahrbaren Fahrgestellrahmen auf. Auf der Maschine ist ein Antriebsmotor vorgesehen, der mit einem Hydraulik-Pumpenaggregat und einem Generator für die Stromversorgung des Schweißaggregates verbunden ist. Zwischen den beiden endseitig angeordneten Fahrkabinen ist ferner ein Generatorschrank und eine Schweißprozeß-Steuereinrichtung vorgesehen. Eine der beiden Fahrkabinen ist in Maschinenlängsrichtung über den angrenzenden Maschinenbereich längsverschiebbar und im Stirnbereich offen ausgebildet. In diesem Bereich ist ein doppelarmiger, teleskopartig verlängerbarer Auslegerkran angeordnet, der mit dem Fahrgestellrahmen um eine vertikale Achse verschwenkbar verbunden ist. Dieser in seinem vorderen, freien Endbereich mit dem Abbrennstumpf-Schweißaggregat über eine Aufhängevorrichtung verbundene Auslegerkran ist mit Hydraulik-Antrieben zur seitlichen Verschwenkung und Längsverschiebung des Auslegerkranes verbunden. Bei zurückgeschobener Fahrkabine ist der Aktionsradius des Auslegerkranes so weit vergrößert, daß dieser bis zu einem rechten Winkel zur Maschinenlängsachse seitlich verschwenkbar ist, wobei die Schweißaggregatmitte bis zu einer Entfernung von bis zu 325o mm von der Gleismitte verstellbar ist. Bei Überstellfahrten wird das Schweißaggregat mit Hilfe des Auslegerkranes in die Fahrkabine eingefahren und diese nach Verschieben bis zum Ende des Fahrgestellrahmens an deren Stirnseite geschlossen.

Das über die Aufhängevorrichtung höhenverstellbare Schweißaggregat besteht aus zwei in Schienen- bzw. Maschinenlängsrichtung hintereinander angeordneten Aggregat-Hälften, die mit Hilfe von zwei Hydraulik-Zylindern in Schienenlängsrichtung zueinander bewegbar sind. An der Unterseite jeder Aggregat-Hälfte ist jeweils ein zur beidseitigen Anlage an den Schienensteg vorgesehenes Klemm- und Schweißbacken-Paar angeordnet, das zusätzlich zur Einspannfunktion auch als Elektrode zur Übertragung des Schweißstromes dient. Durch die Ausbildung als mechanisches Hebelsystem jeder Aggregat-Hälfte ist jedes Klemm- und Schweißbacken-Paar über einen mit dem Hebelsystem verbundenen Hydraulik-Klemm-Zylinder an den Schienensteg anpreßbar. Die - mit den Hydraulik-Zylindern zur Längsverschiebung verbundene - Schweißaggregat-Hälfte weist eine hydraulische Abschervorrichtung zum Entfernen des bei der Schweißung entstehenden Schweißwulstes auf. Am Schweißaggregat befindet sich ein Steuerpult zum Ein- und Ausschalten des Schweißablaufes sowie zur Kontrolle wichtiger Grundfunktionen.

Nach dem Vorfahren der Schweißmaschine und dem Absenken bzw. Zentrieren des Schweißaggregates auf die Schienenlücke werden die beiden Schienenendbereiche durch die beiden Klemm- und Schweißbacken-Paare unter Beaufschlagung der beiden Klemm-Zylinder eingespannt. Die Schienenenden werden bei diesem Einspannvorgang gleichzeitig auch genauestens höhen- und richtungsmäßig justiert. Mit einem Betriebsschalter "Automatik" wird der Schweißstrom und das Ablaufprogramm für den eigentlichen Schweißvorgang eingeschaltet. Vorerst werden die durch die Klemm- und Schweißbacken-Paare festgeklemmten Schienenenden unter Beaufschlagung der beiden Hydraulik-Antriebe durch die beiden Aggregat-Hälften mit ca. o,25 mm/sek. zueinandergeführt. Bei Berührung der Schienenenden erreicht der Schweißstrom durch den dabei entstehenden Kurzschluß einen ersten Spitzenwert. Dies erkennt die Strom-Meßeinrichtung und bringt den Schienenvorschub sofort zum Stillstand. Die Schienenenden erwärmen sich dabei kräftig. Nach ca. einer Sekunde zu hohen Stromes wird eine Rückschubbewegung eingeleitet, welche die eventuell schon zusammenklebenden Schienenenden wieder auseinanderreißt. Dazu werden die beiden Hydraulik-Antriebe in der Gegenrichtung beaufschlagt. Sinkt der Schweißstrom durch Öffnen der Berührungsstelle der beiden Schienenenden wieder ab, wird sofort neuerlich eine Vorschubbewegung mit der entsprechenden Soll-Geschwindigkeit eingeleitet. Dieser Vorgang wiederholt sich einige Male, wobei die Schienenenden immer heißer werden. Ist die Berührungsstelle heiß genug, kommt es erstmals zu einem Schweiß-Schmelzvorgang. Nach ca. dreißig Sekunden dieser als instabile Phase bezeichneten Schweißdauer führt die weitere Erhitzung der Schweißstelle zu einer stabilen Schweißphase, bei welcher der Vorschub - d.h. die Zueinanderbewegung der beiden Schienenenden - mit konstanter Soll-Geschwindigkeit abläuft. Nach Ablauf der vorgewählten Schweißzeit wird die Progressions-Phase eingeleitet. Innerhalb von ca. zehn Sekunden wird die Vorschubgeschwindigkeit auf den drei- bis vierfachen Wert erhöht. Der Schweißstrom steigt entsprechend an, wobei die Schweißstelle ihre höchste Temperatur erreicht. Danach wird der Schweißstrom abgeschaltet und die momentane Wegposition der Klemm- und Schweißbacken-Paare gespeichert. Gleichzeitig wird ein hydraulisches Stromregel-Ventil der Steuereinrichtung ausgeschaltet und ein hydraulisches Ventil mit vergrößertem Durchfluß eingeschaltet. Zur Einleitung des sogenannten abschließenden Stauchschlages werden nun die beiden Schienenenden mit großer Geschwindigkeit und unter Einwirkung des am Ende der Schweißphase erhöhten Druckes kräftig ineinandergeschoben, bis die Wegänderung der Schweißbacken einen vorgewählten Soll-Wert erreicht hat (bis ca. 14 mm). Bei Erreichung des Soll-Wertes wird der Stauchschlag-Vorschub abgeschaltet. Die Klemm- und Schweißbacken-Paare halten die nun miteinander verschweißten Schienenenden in dieser Lage noch für einige Sekunden fest, bis die Schweißstelle etwas abgekühlt ist. Danach werden die Klemm- und Schweißbacken-Paare drucklos gesteuert und ein Rückschub eingeleitet, zwei entsprechend dem Schienenprofilquerschnitt geformte Abschermesser der Abschervorrichtung hiebei geschlossen und durch einen neuerlichen Vorschub der entsprechenden Aggregat-Hälfte wird der überstehende Schweißwulst abgeschert. Anschließend werden die Klemm- und Schweißbacken-Paare sowie die Abschermesser geöffnet und das Schweißaggregat von der Schiene abgehoben. Anschließend ist die Maschine mit vorkragend angeordnetem Schweißaggregat zum nächsten zu verschweißenden Schienenstoß verfahrbar. - Diese mobile, gleisverfahrbare Abbrennstumpf-Schweißmaschine der gleichen Anmelderin ist auch - mit den verschiedenen Einsätzen und Arbeitsmethoden sowie insbesondere mit dem Schweißvorgang selbst - in der Zeitschrift "Railway Gazette", Oktober 1977 - ausführlich beschrieben.

Ein bekanntes elektrisches Abbrennstumpf-Schweißaggregat für eine Schweißmaschine dieser Art - gemäß DE-PS 1 465 042 - weist zwei Greifklauen-Spannvorrichtungen zum Einstellen und Festklemmen der Schweißstücke auf. Diese Spannvorrichtungen besitzen eine gemeinsame Drehachse und sind entlang dieser mittels zweier gegen diese versetzter Kolbenstangen relativ zueinander zum Abschmelzen und Stauchen verschiebbar, wobei die Kolbenstangen symmetrisch zum Schweißstück und mit diesem in einer Ebene liegen und die Spannvorrichtungen miteinander verbinden. Die Drehachse der Spannvorrichtungen ist als Hohlachse ausgebildet, die einen Steuerschieber zur gleichmäßigen Beaufschlagung von Stauchzylindern enthält, wobei der Steuerschieber mittels eines auf die Hohlachse aufgesetzten elektromechanischen Antriebes betätigbar ist.

Ein weiteres bekanntes elektrisches Abbrennstumpf-Schweißaggregat für eine Schweißmaschine dieser Art - gemäß GB-PS 1 513 014 - weist - wie eingangs bereits beschrieben - Klemm- und Schweißbacken-Paare auf, die über ein mit einem Klemmzylinder verbundenes Hebelsystem an den Schienensteg anpreßbar sind. Die zum Abscheren des Schweißwulstes nach Beendigung des Schweißvorganges vorgesehene Abschervorrichtung weist insgesamt vier Abschermesser auf, die in Arbeitsstellung das Querschnittsprofil der Schiene zur Gänze umschließen. Mit einer derartigen integrierten Abschervorrichtung ist der Schweißwulst in vorteilhafter Weise ohne Zuhilfenahme einer unabhängigen Zusatzeinrichtung mit dem Schweißaggregat abscherbar.

Um das Heranziehen der einzelnen vorher von den Schwellen gelösten Schienenstränge - für die Durchführung des elektrischen Abbrennstumpf-Schweißverfahrens mittels solcher Schweißmaschinen - zu ermöglichen, sind weiters sogenannte Schienenzug-Vorrichtungen - z.B. gemäß der GB-PS 1 294 216 - bekannt. Diese als ringförmige Baueinheit ausgebildete Vorrichtung weist zwei in Schienenlängsrichtung voneinander distanzierte Klemmbacken-Paare auf, die jeweils über ein ober- und unterhalb der Schiene angeordnetes Jochglied um eine vertikale Achse drehbar miteinander verbunden sind. Die Klemmbacken sind über einen kurzen Hebel mit in Schienenlängsrichtung verlaufenden, über eine Handpumpe beaufschlagbaren und parallel zur Schienen-Horizontalebene angeordnete Hydraulik-Zylinder bzw. in Längsrichtung derselben verlaufenden Zuggliedern verbunden. Bei Beaufschlagung der beiden Hydraulik-Zylinder werden die Klemmbacken an den Schienensteg angepreßt und nehmen unter weiterer Beaufschlagung der Hydraulik-Zylinder die beiden Schienenendbereiche für eine Zueinanderbewegung derselben mit. Derartige bekannte Schienenzug-Vorrichtungen werden zur Vorbereitung beim nachfolgenden Schweißvorgang durch Abbrennstumpf-Schweißen oder Alu-Thermit-Schweißen eingesetzt, insbesondere für den richtigen Abstand der beiden Enden zweier zu verschweißender Schienenstücke.

Eine weitere derartige Schienenzug-Vorrichtung - gemäß GB-PS 1 161 307 - weist ebenfalls mit Hydraulik-Zylindern bzw. Zuggliedern verbundene, quer zur Schienenlängsrichtung angeordnete Joch- oder Halteglieder auf. Diese sind jedoch jeweils mit einem Paar von Keilen verbunden, die jeweils zur Anlage an die Schienenkopf-Seitenflanke ausgebildet sind und sind auf Grund der relativ geringen Zugkraft lediglich zum Heranziehen kürzerer Schienenabschnitte geeignet.

Es ist aber auch bekannt - gemäß AT-PS 357 594 der gleichen Anmelderin bzw. Patentinhaberin - um das Heranziehen der von den Schwellen gelösten Schienen zu erleichtern - bei Anordnung des Schweißaggregates zwischen den Fahrwerken einer Schweißmaschine - eine als Hubstempel ausgebildete Abstützvorrichtung im Bereich eines der Maschinenfahrwerke anzuordnen. Dieser Hubstempel wird vor dem Schweißvorgang auf die Schwellen abgesenkt, bis sich das benachbarte Maschinenfahrwerk geringfügig von den Schienen abhebt. Die somit vom Maschinengewicht entlastete Schiene kann nun problemlos insbesondere auch für den abschließenden Stauchschlag unter Bildung des Schweißwulstes in Richtung zum Schienenstoß verschoben werden.

Die beschriebenen mobilen Schienen-Schweißaggregate verfügen derzeit über ausreichende Zugkraft für die Abbrennstumpf-Schweißung inklusive Stauchschlag mit einem geringen Kraftüberschuß für das Schienenziehen. Dies reicht aus zum Verschweißen kurzer Schienen bzw. für das Schweißen von Langschienen, sofern diese auf Rollen vorgelagert sind. Bei Schlußschweißungen werden die Schienen aus den Befestigungen herausgehoben und die beim Schweißen auftretende Längenänderung durch Einfügen eines entsprechenden Schienenstückes ausgeglichen. Für das Verschweißen von längeren Schienenstrangabschnitten, insbesondere von nicht auf Rollen vorgelagerten Langschienen, weiters beim Herausschneiden von sogenannten Thermit-Schweißstößen mit relativ großen Schweißlücken, die durch einen Abbrennstumpf-Schweißstoß ersetzt werden müssen, sowie für Schlußschweißungen bei Temperaturen unterhalb der Normal-Temperatur und bei durchgehend verschweißten Gleisen, ist aber eine größere Zugkraft erwünscht.

Die Aufgabe der Erfindung besteht daher darin, eine fahrbare elektrische Abbrennstumpf-Schweißmaschine der eingangs beschriebenen Art zu schaffen, mittels welcher verbesserte Einsatzmöglichkeiten, insbesondere größere Zugkräfte sowohl für das Heranziehen des Schienenstranges als auch beim abschließenden Stauchschlag selbst erzielbar sind.

Diese Aufgabe wird mit einer Maschine der eingangs beschriebenen Art dadurch gelöst, daß dem Abbrennstumpf-Schweißaggregat eine Schienen-Zieh- bzw. Verschiebevorrichtung zugeordnet ist, die zur das Schweißaggregat in der Arbeitsposition in Schienen-Horizontalebene umfassenden Anordnung vorgesehen ist und wenigstens zwei - zum Angriff des unmittelbar vor und hinter dem Schweißaggregat angrenzenden Schienenendbereiches vorgesehene und über eine in Längsrichtung der Vorrichtung verlaufende Hydraulik-Zylinder-Kolben-Anordnung beaufschlagbare und mit dieser miteinander verbundene - Schienen-Klemmbacken-Paare aufweist. Durch diese überraschend einfache und wirkungsvolle Kombination einer Schienenverschiebe-Vorrichtung mit einem Abbrennstumpf-Schweißaggregat wird-unter vorteilhafter unveränderter Ausbildung des im Einsatz bestens bewährten Abbrennstumpf-Schweißaggregates - eine Schweißmaschine mit relativ hoher zusätzlicher Zug- bzw. Schubkraft geschaffen, da nunmehr pro Schienenende zusätzlich zum Klemm- und Schweißbacken-Paar des Schweißaggregates das zusätzliche Schienen-Klemmbacken-Paar der Vorrichtung für die Schieneneinklemmung und -verschiebung zur Verfügung steht. Dies ist besonders für die Verschweißung von schweren Langschienen sehr vorteilhaft, da diese unter Vermeidung einer arbeits- und zeitaufwendigen Rollenlagerung rasch und störungsfrei - lediglich bei vorheriger Lösung der Schienenbefestigungsmittel - verschiebbar sind. Mit der erfindungsgemäß ausgebildeten Schweißmaschine kann nunmehr auch insbesondere eine für den abschließenden Stauchschlag beim Abbrennstumpf-Schweißverfahren erforderliche hohe Zug- bzw. Schubkraft auch für schwerste Schienenstränge aufgebracht werden, wodurch eine Steigerung sowohl in wirtschaftlicher als auch qualitativer Hinsicht erzielt wird. Durch die das Schweißaggregat umschließende Ausbildung der Schienenverschiebe-Vorrichtung sind die Schienenverschiebungen des Schweißaggregates und der Vorrichtung auch ungehindert unter Verstärkung der Zugkraft getrennt oder auch insbesondere gemeinsam durchführbar.

Die erfindungsgemäße Maschine eröffnet viele weitere vorteilhafte Einsatzmöglichkeiten. So ist in vorteilhafter Weise nach Beendigung des Schienenheranzieh-Vorganges lediglich mit den zusätzlichen Klemmbacken oder auch gemeinsam mit den Klemm- und Schweißbacken unmittelbar danach der Schweißvorgang selbst lediglich vom Schweißaggregat und der abschließende Stauchschlag wieder vom Schweißaggregat und der Schienenverschiebe-Vorrichtung gemeinsam durchführbar. Die Schienenverschiebe-Vorrichtung der erfindungsgemäßen Schweißmaschine kann ferner in vorteilhafter Weise sowohl mit der Maschine als auch getrennt im Einzeleinsatz bei Vorarbeiten Verwendung finden.

Eine vorteilhafte Weiterbildung der Erfindung besteht darin, daß die - als ringförmige, mechanische Baueinheit ausgebildete und mit jeweils zur Anordnung - in Schienenlängsrichtung gesehen - links und rechts des Schienenstoßes verlaufenden, hydraulischen Antriebszylinder versehene - Schienenverschiebe-, insbesondere Schienenzieh-Vorrichtung einen inneren Querschnitt mit lichter Innenbreite und lichter Innenlänge aufweist, der - zur umfassenden Aufnahme des Schweißaggregates in Schienen-Horizontalebene - größer ist als der durch den Umfang der maximal voneinander verstellten beiden Schweißaggregat-Hälften gebildete Querschnitt mit dessen Breite und Länge. Durch diese entsprechend "große" ringförmige Ausbildung ist das Schweißaggregat ungehindert in diese bereits in Arbeitsposition befindliche Schienenverschiebe-Vorrichtung einführ- und in Arbeitsposition bringbar. Dabei sind sowohl vom Schweißaggregat als auch von der Schienenverschiebe-Vorrichtung sämtliche Arbeitsbewegungen ungehindert voneinander durchführbar.

Eine weitere vorteilhafte Ausbildung der Erfindung besteht darin, daß die beiden, jeweils zur Anordnung links und rechts eines Schienenstranges vorgesehenen hydraulischen Antriebszylinder der hydraulischen Kolben-Zylinder-Anordnung der Schienenverschiebe-Vorrichtung für eine gemeinsame in Schienen-Horizontale-ebene und in Schienenlängsrichtung wirkende Zug- bzw. Verschiebekraft von mehr als 120 t - vorzugsweise etwa 130 t - ausgebildet sind. Mit dieser besonders hohen Zug- bzw. Verschiebekraft der beiden Antriebszylinder der das Schweißaggregat umschließenden Verschiebe-Vorrichtung sind insbesondere auch gemeinsam mit den Hydraulik-Zylindern des Schweißaggregates auch schwere Langschienen ohne zeit- und arbeitsaufwendige Rollenlagerung problemlos verschiebbar, bis der gewünschte Abstand der beiden Schienenenden für eine Verschweißung durch das Schweißaggregat erreicht ist. Es sind damit sogar neu auf einem planen Schotterbett abgelegte Gleisjoche mitsamt den Schwellen für eine Verschweißung verschiebbar.

Nach einer besonders vorteilhaften Weiterbildung der Erfindung sind die beiden, über die Antriebszylinder und den zugeordneten Kolbenstangen beaufschlagbaren Klemmbakken-Paare jeweils durch eine kniehebel- bzw. exzenterartig wirkende Klemmhebelanordnung gebildet. Die kniehebelartig wirkende Klemmhebelanordnung sichert eine besonders feste Anpressung der Klemmbacken-Paare an den Schienensteg, so daß die hohen Zug- bzw. Verschiebekräfte der beiden Antriebszylinder störungsfrei und vor allem gleitfrei auf die Schiene übertragbar sind.

Eine weitere vorteilhafte Ausbildung der Erfindung besteht darin, daß die Schienenverschiebe-Vorrichtung in ihrer Längsrichtung aus zwei elektrisch voneinander isolierten, hintereinander angeordneten und jeweils symmetrisch zur Längs-Symmetrieebene der Vorrichtung angeordneten Abschnitten gebildet ist, die lediglich über eine elektrische Isolierungsschichte miteinander fest, insbesondere jeweils über eine Schraubverbindung verbunden sind. Diese Ausbildung von zwei lediglich über eine Isolierungsschichte miteinander verbundenen Abschnitten der Schienenverschiebe-Vorrichtung weist den besonderen Vorteil auf, daß eine den Schweißvorgang durch das innerhalb der Vorrichtung befindliche Schweißaggregat beeinträchtigende Kurzschlußbildung zuverlässig vermieden wird.

Eine besonders zweckmäßige Ausbildung der Erfindung besteht darin, daß die elektrische Isolierungsschichte jeweils in einem mit der Klemmbacke und der Kolbenstange des entsprechenden Antriebszylinders verbundenen und in Zug- bzw. Schublängsrichtung verlaufenden Zug- glied quer zu dessen Längsrichtung verlaufend angeordnet ist. Durch diese Ausbildung sind die hohen Zug- bzw. Verschiebekräfte der Vorrichtung problemlos über entsprechende, ebenfalls isolierte und senkrecht zur Isolationsschichte verlaufende Schraubverbindungen übertragbar.

Eine andere vorteilhafte Weiterbildung der Erfindung besteht darin, daß die Antriebszylinder für die beiden Klemmbacken-Paare der Schienenverschiebe-Vorrichtung und die Hydraulik-Zylinder für die Längsverschiebung der beiden Aggregat-Hälften mit den Klemm- und Schweißbacken-Paaren des Schweißaggregates mit einer gemeinsamen hydraulischen Antriebsquelle bzw. dem Hydraulik-Pumpenaggregat der Maschine verbunden sind. Durch ein in vorteilhafter Weise gemeinsames Hydraulik-Pumpenaggregat für die Hydraulik-Zylinder zur Längsverschiebung der Klemm- und Schweißbacken-Paare und für die Antriebszylinder zur Längsverschiebung der Schienen-Klemmbacken-Paare ist eine gleichmäßige Verschiebung mit gleichmässigem Druck auf die Schienenenden erzielbar.

Die beiden Klemmbacken-Paare und die beiden Klemm- und Schweißbacken-Paare sind gemäß einer anderen bevorzugten Weiterbildung der Erfindung über ihre jeweiligen hydraulischen Antriebs- bzw. Hydraulik-Zylinder und die Steuereinrichtung für eine gemeinsame Schweißprozeß-Steuerung beaufschlagbar. Durch diese gemeinsame Beaufschlagung der Antriebs- und Hydraulik-Zylinder durch die Schweißprozeß-Steuereinrichtung sind die Längsverschiebungen der Klemmbacken-Paare der Verschiebe-Vorrichtung und die Klemm- und Schweißbacken-Paare des Schweißaggregates in vorteilhafter Weise voll synchron durchführbar. Damit bilden praktisch das Schweißaggregat und die Schienenverschiebe-Vorrichtung eine gemeinsame funktionelle Baueinheit.

Eine andere vorteilhafte Weiterbildung der Erfindung besteht darin, daß die mit den Klemmbacken-Paaren verbundenen Antriebszylinder und die zur Längsverschiebung der beiden Hälften des Schweißaggregates ausgebildeten Hydraulik-Zylinder über Hydraulikleitungen parallel geschaltet sind und mit einem Steuerblock der Steuereinrichtung in Verbindung stehen, der ein 4/3-Wegeventil, ein hydraulisches Stromregel-Ventil und ein mit einem 4/2-Wegeventil verbundenes Druckregel-Ventil aufweist, wobei das 4/2-Wegeventil einer weiteren, die Zu- bzw. Ableitung des Stromregel-Ventiles miteinander verbindenden Hydraulikleitung zugeordnet ist. Durch diese einfache Verbindung von Steuereinrichtung und einem derartig ausgebildeten Steuerblock ist in Abhängigkeit von der Schweißprozeß-Steuerung eine gleichmäßige Beaufschlagung der Antriebs- und Hydraulik-Zylinder des Schweißaggregates erzielbar.

Gemäß einer besonders vorteilhaften Ausbildung der Erfindung ist das hydraulische Stromregel-Ventil zur Änderung des durch die mit den Klemmbacken und mit den Schweißaggregat-Hälften verbundenen Antriebs- bzw. Hydraulik-Zylinder fließenden Ölstromes ausgebildet und mit der Steuereinrichtung - für eine Änderung der Kolben- bzw. Schienenverschiebe-Geschwindigkeit - über eine elektrische Leitung zur Aufnahme eines analogen elektrischen Signales an Hand des jeweiligen Schweißprozeß-Programmes verbunden. Durch diese Ausbildung ist der Vor- oder Rückschub der Hydraulik- und Antriebs-Zylinder bzw. deren Kolben entsprechend einer gewünschten - gemeinsamen - Soll-Geschwindigkeit durch das hydraulische Stromregel-Ventil durchführbar. Dabei erzwingt ein analoges elektrisches Signal einen diesem Signal entsprechenden Ölstrom. Die Geschwindigkeit sämtlicher vier Hydraulik-Zylinder hängt damit proportional mit dem Volumen des Ölstromes zusammen, wodurch ein gleichmäßiger und gleich großer Weg für jeden Hydraulik-Zylinder erzielbar ist.

Eine andere vorteilhafte Weiterbildung der Erfindung besteht darin, daß die, dem über Antriebe quer-, höhen- und längsverstellbaren Abbrennstumpf-Schweißaggregat der Maschine in Arbeitsrichtung vorgeordnete Schienenverschiebe-Vorrichtung mit den beiden über die Hydraulik-Zylinder-Kolben-Anordnung verbundenen Klemmbacken-Paaren mit an der Maschine vorgesehenen Antrieben zur Quer-, Höhen- und Längsverstellung verbunden ist. Eine derartige Quer-, Höhen- und Längsverstellung des Schweißaggregates sowie der Schienenverschiebe-Vorrichtung ermöglicht in einfachster Weise deren rasche und genaue Zentrierung über den zu verschweißenden Schienenstoß. Durch die Anordnung des Schweißaggregates bzw.der Verschiebe-Vorrichtung in Maschinenlängsrichtung hintereinander ist eine besonders einfache Zugänglichkeit sowie Handhabung gewährleistet.

Eine weitere vorteilhafte Ausbildung der Erfindung besteht darin, daß das Schweißaggregat und die Schienenverschiebe-Vorrichtung mit ihren Antrieben an einem über ein Fahrwerk abgestützten Anhänger der Maschine vorgesehen ist, wobei das Schweißaggregat an einem zentralen und am Fahrgestellrahmen gelenkig gelagerten, brückenförmig ausgebildeten Maschinenrahmen des Anhängers angeordnet und über Längs- und Querführungen durch Hydraulik-Antriebe längs- und querverstellbar und über einen Hydraulik-Zylinder mittels einer Aufhängevorrichtung höhenverstellbar ausgebildet ist und daß die Schienenverschiebe-Vorrichtung vorzugsweise im Bereich einer Kabine des Anhängers über einen teleskopförmig ausfahrbaren und über einen Antrieb um eine Querführung verschwenkbar gelagerten Hydraulik-Ausleger, mittels einer Aufhängevorrichtung quer-, längs- und höhenverstellbar ausgebildet ist. Mit dieser besonderen Rahmenkonstruktion der Maschine mit einem brückenförmigen Maschinenrahmen ist das Schweißaggregat und die Verschiebe-Vorrichtung rasch und ohne Schwierigkeiten von der Überstell- in die Arbeitsposition bzw. umgekehrt bringbar. Die Anordnung des Schweißaggregates und der Verschiebe-Vorrichtung in Maschinenlängsrichtung hintereinander sowie deren voneinander unabhängige Längs-, Höhen- und Querverschiebung hat weiters den besonderen Vorteil, daß die Einrichtungen auch gegebenenfalls voneinander unabhängig einsetzbar sind.

Mit einer weiteren vorteilhaften Ausbildung der Erfindung ist der Anhänger mit seinem als schienengebundene und mit Spurkranzrädern versehene Fahrachse ausgebildeten Fahrwerk mittels auf den Schwellen und-/oder am Schotterbett aufsetzbarer, hydraulisch beaufschlagbarer Hubstempel - zur Schienenentlastung - höhenverstellbar ausgebildet. Mit der Anordnung von Hubstempeln am Anhänger ist dieser zur Entlastung von den unter dem Anhänger-Fahrwerk befindlichen Schienen und gegebenenfalls auch Schwellen abhebbar. Einer der beiden Schienenstränge ist dadurch ungehindert, insbesondere durch gemeinsamen Einsatz von Schweißaggregat und Schienenverschiebe-Vorrichtung in Richtung zum Schienenstoß verschiebbar, ohne daß dabei der Anhänger bzw. das auf die Schienen wirkende Gewicht nachteilig einwirkt.

Gemäß einer weiteren zweckmäßigen Ausbildung der Erfindung ist vorgesehen, daß die beiden - in Gleislängsrichtung verlaufend angeordneten Antriebszylinder der als ringförmige Baueinheit ausgebildeten Schienenverschiebe- insbesondere Schienenzug-Vorrichtung mit Anschlüssen für eine hydraulische Beaufschlagung über flexible Hydraulikleitungen von der gemeinsamen, am Fahrgestellrahmen der Maschine angeordneten Antriebsquelle bzw. des Hydraulik-Pumpenaggregates ausgebildet ist. Mit diesen flexiblen Hydraulikleitungen ist die Schienenverschiebe-Vorrichtung im relativ weiten Bereich unterhalb des brückenförmigen Maschinenrahmens bewegbar. Dabei ist unabhängig von der momentanen Lage der Vorrichtung stets eine Energieversorgung der beiden Antriebszylinder gesichert.

Die Erfindung wird im folgenden an Hand eines in der Zeichnung dargestellten Ausführungsbeispieles näher beschrieben.

Es zeigen:

Fig.1 eine Seitenansicht einer erfindungsgemäß ausgebildeten Maschine zum elektrischen Abbrennstumpf-Verschweißen von Schienenstößen des verlegten Gleises mit einem Abbrennstumpf-Schweißaggregat und einer diesem zugeordneten Schienenverschiebe-Vorrichtung,

Fig.2 eine Teil-Draufsicht auf die Maschine gemäß Fig.1 mit dem Abbrennstumpf-Schweißaggregat und der dieses umschließenden Schienenverschiebe-Vorrichtung in Arbeitsstellung über zwei miteinander zu verschweißenden Schienenstücke eines Schienenstranges,

Fig.3 eine Teil-Seitenansicht der erfindungsgemäß ausgebildeten Maschine entsprechend der Stellung des Schweißaggregates und der Schienenverschiebe-Vorrichtung nach Fig.2,

Fig.4 eine größere Detail-Seitenansicht des Abbrennstumpf-Schweißaggregates mit der dieses umschliessenden Schienenverschiebe-Vorrichtung in Arbeitsposition,

Fig.5 eine Draufsicht auf das Abbrennstumpf-Schweißaggregat und die Schienenverschiebe-Vorrichtung gemäß Fig.4,

Fig.6 eine Ansicht des Schweißaggregates mitsamt der Schienenverschiebe-Vorrichtung in Schienenlängsrichtung gemäß dem Pfeil VI in Fig.5,

Fig.7 eine stark schematisch dargestellte Seitenansicht der erfindungsgemäß ausgebildeten Schienenverschiebe-Vorrichtung mitsamt dem von dieser umschlossenen Schweißaggregat in Arbeitsposition und

Fig.8 eine ebenfalls stark schematische Draufsicht auf die Schienenverschiebe-Vorrichtung und das Schweißaggregat gemäß Fig.7 mit einem Elektro-Hydraulik-Schaltschema zur gemeinsamen Steuerung der Schienen-Längsverschiebung durch die beiden Hälften des Schweißaggregates und die Schienenverschiebe-Vorrichtung.

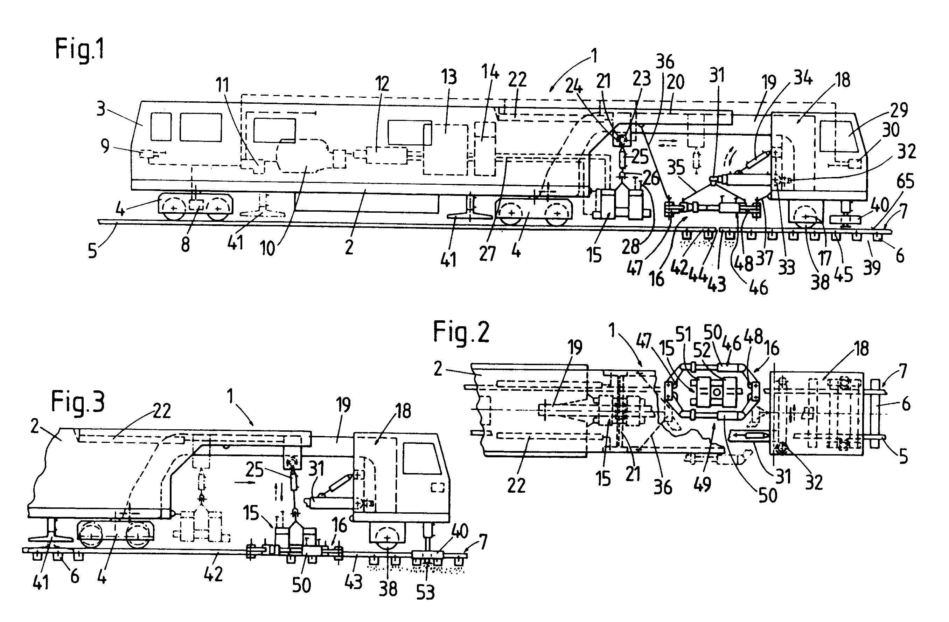

Die in Fig.1 dargestellte Maschine 1 zum elektrischen Abbrennstumpf-Verschweißen setzt sich aus einem langgestreckten Fahrgestellrahmen 2 mit einer Fahrkabine 3 zusammen und ist über Fahrwerke 4 auf einem aus zwei Schienen bzw. Schienensträngen 5 und Querschwellen 6 gebildeten Gleis 7 über einen Fahrantrieb 8 verfahrbar. Anschließend an die eine Steuereinrichtung 9 aufweisenden Fahrkabine 3 befindet sich ein Antriebsmotor 10, der über ein entsprechendes Getriebe sowohl ein Hydraulik-Pumpenaggregat 11 als auch einen Generator 12 antreibt. Dieser steht über elektrische Leitungen mit einem Generatorschrank 13 und einer Schweißprozeß-Steuereinrichtung 14 in Verbindung. Ein Abbrennstumpf-Schweißaggregat 15 und eine Schienenverschiebe-Vorrichtung 16 sind an einem über eine Fahrachse 17 abgestützten Anhänger 18 der Maschine 1 vorgesehen. Das Schweißaggregat 15 ist an einem zentralen und am Fahrgestellrahmen 2 gelenkig gelagerten brückenförmig ausgebildeten Maschinenrahmen 19 des Anhängers 18 angeordnet und über Längs- und Querführungen 20,21 durch Hydraulik-Antriebe 22,23 längs- und querverstellbar. Der für die Querverschiebung vorgesehene Hydraulik-Antrieb 23 ist als Hydraulikmotor mit einem Ritzel ausgebildet, das in eine quer zur Maschinenlängsrichtung verlaufende Zahnstange 24 eingreift. Zur Höhenverstellung ist ein Hydraulik-Zylinder 25 vorgesehen, der über eine Aufhängevorrichtung 26 mit dem Schweißaggregat 15 verbunden ist. Zur Verbindung des Schweißaggregates 15 mit dem Fahrgestellrahmen 2 für die Überstellfahrt sind zweckmässig zwei lösbare Befestigungsstangen (strichlierte Mittelstellung) vorgesehen. Das Schweißaggregat 15 ist über Stromversorgungsleitungen 27 und über Hydraulikleitungen 28 mit der Schweißprozeß-Steuereinrichtung 14 und dem Hydraulik-Pumpenaggregat 11 verbunden.

Die Schienenverschiebe-Vorrichtung 16 ist im Bereich einer Fahrkabine 29 des Anhängers 18 mit einer Steuereinrichtung 30 über einen als Hydraulik-Ausleger ausgebildeten Antrieb 31 teleskopartig ausfahrbaren und über einen weiteren, als Seilzug ausgebildeten Antrieb 32 um eine Querführung 33 verschwenkbar gelagerten Antrieb 34 und mittels einer Aufhängevorrichtung 35 quer-, längs- und höhenverstellbar ausgebildet. Zur besseren Absicherung der Schienenverschiebe-Vorrichtung 16 für die Überstellfahrt (strichlierte Mittelstellung) ist diese über lösbare Befestigungsstangen 36,37 mit dem vorkragend ausgebildeten Teil des Fahrgestellrahmens 2 bzw. mit dem Maschinenrahmen 19 des Anhängers 18 verbunden. Der Anhänger 18 ist mit seinem als schienengebundene und mit Spur kranzrädern versehene Fahrachse ausgebildeten Fahrwerk 38 mittels auf den Schwellen und/oder am Schotterbett 39 aufsetzbarer hydraulisch beaufschlagbarer Hubstempel 40 zur Schienen- und gegebenenfalls Schwellenentlastung höhenverstellbar ausgebildet. Zwischen den beiden Fahrwerken 4 des Fahrgestellrahmens 2 ist wenigstens ein weiterer höhenverstellbarer Hubstempel 41 zur Auflage auf den Schwellen 6 vorgesehen. Wie in Fig.1 und 2 ersichtlich, befindet sich die Schienenverschiebe-Vorrichtung 16 oberhalb eines durch Distanzierung zweier angrenzender Schienenendbereiche 42,43 gebildeten Schienenstoßes bzw. einer Schienenlücke 44. Mit 45 sind die zur lösbaren Verbindung der Schienen 5 mit den Schwellen 6 vorgesehenen Schienenbefestigungsmittel bezeichnet.

Wie in Fig.2 dargestellt, umfaßt die Schienenverschiebe-Vorrichtung 16 in der Arbeitsposition das Abbrennstumpf-Schweißaggregat 15 in einer umfassenden Anordnung in Schienen-Horizontalebene. Die Schienenverschiebe-Vorrichtung 16 weist zwei zum Angriff des unmittelbar vor und hinter dem Schweißaggregat 15 angrenzenden Schienenendbereiches 42,43 vorgesehene und über eine Hydraulik-Zylinder-Kolben-Anordnung 46 beaufschlagbare und mit dieser miteinander verbundene Schienen-Klemmbacken-Paare 47,48 auf. Die Hydraulik-Zylinder-Kolben-Anordnung 46 der als ringförmige , mechanische Baueinheit 49 ausgebildeten Schienenverschiebe-Vorrichtung 16 weist zwei zueinander parallel verlaufende Antriebszylinder 50 auf.

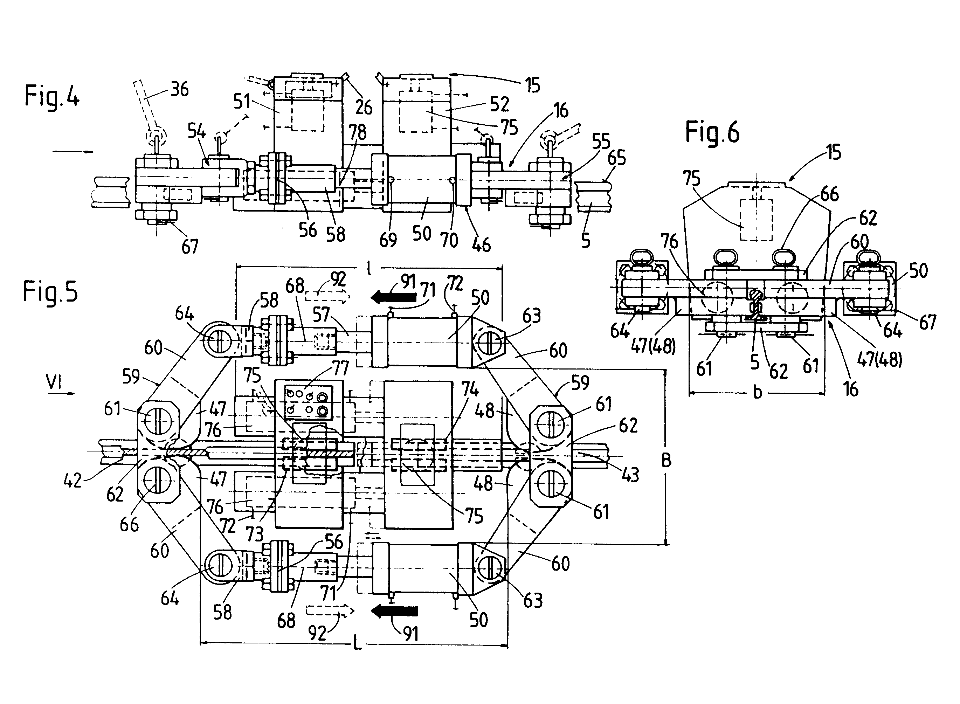

Die - wie in Fig.2 und im größeren Maßstab in den Fig.4 bis 6 ersichtlich - mit den jeweils zur Anordnung links und rechts des Schienenstoßes verlaufenden hydraulischen Antriebszylindern 50 versehene Schienenverschiebe-, insbesondere Schienenzug-Vorrichtung 16 weist einen inneren Querschnitt mit lichter Innenbreite B und lichter Innenlänge L auf, der zur umfassenden Aufnahme des Schweißaggregates 15 in Schienen-Horizontalebene größer ist als der durch den Umfang der bei einem Hub von etwa 70 cm maximal voneinander verstellten beiden Schweißaggregat-Hälften 51,52 gebildete Querschnitt mit der Breite b und der Länge l. Im vorliegenden bevorzugten Ausführungsbeispiel beträgt die Breite b des ca. 2,5 t schweren Schweißaggregates 15 in Schienen-Horizontalebene 65 etwa 92,5 cm und die Länge l etwa 162,5 cm. Die lichte Innenbreite der ca. 650 kg schweren Verschiebe-Vorrichtung 16 - bei an den Schienensteg angepreßten Klemmbacken - beträgt dagegen etwa 107 cm und die lichte Innenlänge L etwa 172,5 cm.

Wie in Fig.3 dargestellt, stützt sich der Anhänger 18 der Maschine I über die beiden Hubstempel 40 auf die Schwellen 6 und durch einen weiteren Hilfs-Hubstempel 53 wahlweise auch auf dem Schotterbett ab. Dadurch wird das Fahrwerk 38 vom Gleis 7 abgehoben und das im Bild rechte Schienenstück mit seinem Schienenendbereich 43 vom Gewicht des Anhängers 18 entlastet. Auf diese Weise ist der rechte Schienenendbereich 43 nach Lösung der entsprechenden Schienenbefestigungsmittel 45 ungehindert in Richtung zum linken Schienenendbereich 42 für eine Verschweißung des Schienenstoßes verschieb- bzw. ziehbar. Für eine erforderlichenfalls wahlweise Verschiebung des linken Schienenendbereiches 42 kann auch das dem Schweißaggregat 15 benachbarte angrenzende Fahrwerk 4 der Maschine I mit Hilfe des auf die Schwellen 6 abgesenkten Hubstempels 41 angehoben werden.

Die in Fig. 4, 5 und 6 vergrößert dargestellte Schienenverschiebe-Vorrichtung 16 ist in ihrer Längsrichtung aus elektrisch voneinander isolierten, hintereinander angeordneten und jeweils symmetrisch zur Längs-Symmetrieebene der Vorrichtung 16 angeordneten Abschnitten 54,55 gebildet. Diese sind lediglich über eine elektrische Isolierungsschichte 56 fest, insbesondere über eine Schraubverbindung miteinander verbunden. Die elektrische Isolierungsschichte 56 ist jeweils in einem mit der Klemmbacke 47 und der Kolbenstange 57 des entsprechenden Antriebszylinders 50 verbundenen und in Zug- bzw. Schublängsrichtung verlaufenden Zugglied 58 quer zu dessen Längsrichtung verlaufend angeordnet. Die beiden über die Antriebszylinder 50 und den zugeordneten Kolbenstangen 57 beaufschlagbaren sowie zueinander spiegelbildlich angeordneten Klemmbacken-Paare 47,48 sind jeweils durch eine kniehebelartig wirkende Klemmhebelanordnung, die mit 59 bezeichnet ist, gebildet. Diese setzt sich aus jeweils mit einer Klemmbacke 47 bzw. 48 verbundenen Klemmhebeln 60 zusammen, die im Bereich der Klemmbacken-Paare 47,48 jeweils durch Steckbolzen 61 mit einem quer zur Maschinenlängsrichtung verlaufenden Jochglied 62 verbunden sind. Die jeweils gegenüberliegenden Enden der Klemmhebel 60 eines Klemmbacken-Paares 47 bzw. 48 sind im rechten Abschnitt 55 jeweils über Steckbolzen 63 mit dem zugeordneten Antriebszylinder 50 und im linken Abschnitt 54 jeweils über Steckbolzen 64 mit dem zugeordneten Zugglied 58 verbunden. Die Klemmhebel 60 sind, wie beschrieben, über Steckbolzen 61 und Jochglieder 62 schwenkbar gelagert, wobei zwischen dem unteren Jochglied 62 und dem jeweiligen Klemmhebel 60 ein vorzugsweise mit dem unteren Jochglied 62 verschweißter Distanzring vorgesehen ist.

Wie in Fig.4 ersichtlich, sind die einzelnen Teile der Schienenverschiebe-Vorrichtung 16 im wesentlichen in einer durch die beiden Schienenoberkanten der beiden Schienenstücke gebildeten Schienen-Horizontalebene 65 angeordnet. Jeder der senkrecht zu dieser Schienen-Horizontalebene 65 verlaufenden Steckbolzen 61,63,64 ist im oberen Endbereich mit einer Lasche 66 und im unteren Endbereich mit einem lösbaren Splint 67 verbunden. Die beiden jeweils zur Anordnung links und rechts eines Schienenstranges vorgesehenen hydraulischen Antriebszylinder 50 der hydraulischen Kolben-Zylinder-Anordnung 46 sind für eine gemeinsame Zug- bzw. Verschiebekraft von mehr als 120 t ausgebildet. Der Abstand der beiden Steckbolzen 63,64 in Längsrichtung der Schub- bzw. Zugachse 68 beträgt im vorliegenden Ausführungsbeispiel etwa 1,5 m, der sich durch die Hublänge der Antriebszylinder 50 von vorzugsweise etwa 30 cm entsprechend vergrößert. Dieser Abstand von etwa 1,5 m bei etwa halb ausgefahrenen Kolbenstangen 57 ermöglicht eine ungehinderte, berührungslose Umschließung des Abbrennstumpf-Schweißaggregates 15, wobei der Abstand der beiden parallel zueinander verlaufenden Schub- bzw. Zugachsen 68 zueinander bei an die Schiene angepreßten Klemmbacken-Paaren 47,48 etwa 1,4 m entspricht. Die beiden in Gleislängsrichtung verlaufend angeordneten Antriebszylinder 50 sind mit Anschlüssen 69,70 für eine hydraulische Beaufschlagung über flexible Hydraulikleitungen 71,72, die zum Pumpen-Aggregat 11 der Maschine I führen, ausgebildet.

Jede der beiden Schweißaggregat-Hälften 51,52 weist ein Klemm- und Schweißbacken-Paar 73,74 auf, das jeweils durch einen hydraulischen Klemmzylinder 75 an den Schienensteg anpreßbar ist. Zur Längsverschiebung der beiden Schweißaggregat-Hälften 51,52 in Schienenlängsrichtung zueinander sind zwei in Schienenlängsrichtung verlaufende Hydraulik-Zylinder 76 vorgesehen. Gemeinsam mit dieser Längsverschiebung der beiden Schweißaggregat-Hälften 51,52 (oder der einen zur anderen Hälfte) erfolgt auch eine Längsverschiebung der Klemm- und Schweißbacken-Paare 73,74 (oder des einen Paares zum anderen Paar) mitsamt den in diesen eingeklemmten Schienenendbereichen 42,43. Zur Bedienung des Schweißaggregates 15 und der Schienenverschiebe-Vorrichtung 16 ist eine am Schweißaggregat 15 befestigte Steuereinrichtung 77 vorgesehen. Die mit den Hydraulik-Zylindern 76 verbundene Schweißaggregat-Hälfte 51 weist eine integrierte hydraulische Abschervorrichtung 78 zum Entfernen des nach erfolgter Schweißung gebildeten Schweißwulstes auf.

In Fig.6 ist die Anlage des Schienen-Klemmbacken-Paares 47 bzw. 48 an den Schienensteg erkennbar. Zur Übertragung sehr großer Klemmkräfte ist aus diesem Grund sowohl oberhalb als auch unterhalb der Schiene 5 ein die beiden in Querrichtung einander gegenüberliegenden Klemmhebel 60 verbindendes Jochglied 62 vorgesehen. Die Schienen-Klemmbacken 47,48 sind jeweils an die Unterseite des zugeordneten Klemmhebels 60 angeschweißt bzw. mit diesem aus einem Stück gebildet. Jeweils zwischen den beiden Klemmbacken 47 bzw. 48 und dem Schienensteg sind - zur verbesserten Klemm-Anlage und/oder zu Isolationszwecken - jeweils (wie auch in Fig.5 mit strichliertem Kreis angedeutet) Anlagebacken vorgesehen. Mit strichlierten Linien sind sowohl die beiden äußeren Antriebszylinder 50 der Schienenverschiebe-Vorrichtung 16 als auch die innerhalb der Vorrichtung 16 liegenden Hydraulik-Zylinder 76 des Schweißaggregates 15 dargestellt. Die Übertragung der Klemmkräfte auf die Schienen-Klemm- und Schweißbacken-Paare 73,74 durch die vertikal angeordneten Klemm-Zylinder 75 erfolgt über ein nicht näher dargestelltes Hebelsystem im Schweißaggregat 15.

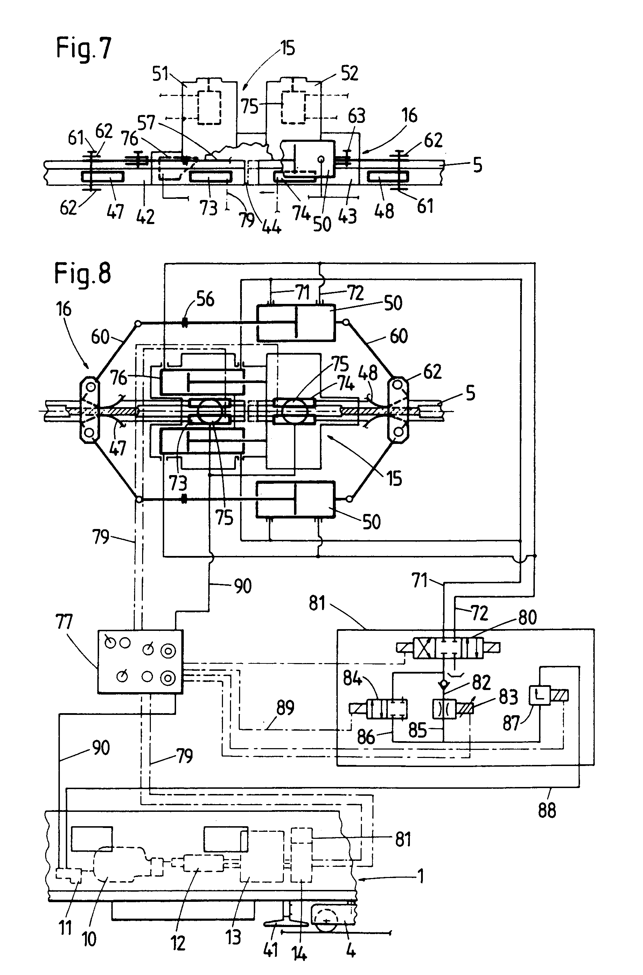

In der schematischen Darstellung nach Fig.7 sind ebenso die beiden an den Schienensteg angepreßten Klemm- und Schweißbacken-Paare 73,74 sowie die beiden äußeren Schienen-Klemmbacken-Paare 47,48 ersichtlich. Die Klemm- und Schweißbacken-Paare 73,74 dienen gleichzeitig zur Einspannfunktion und auch als Elektroden, durch die der Schweißstrom über Stromleitungen 79 bzw. 27 (Fig.1) auf die beiden Schienenendbereiche 42,43 übertragen wird.

Wie in Fig.8 schematisch dargestellt, sind die zur Beaufschlagung der beiden Antriebszylinder 50 als auch der beiden Hydraulik-Zylinder 76 dienenden Hydraulikleitungen 71,72 einem 4/3-Wegeventil 80 eines hydraulischen Steuerblocks 81 zugeführt. Von diesem Wegeventil 80 führt eine weitere Hydraulikleitung 82 mit einem Rückschlagventil zu einem hydraulischen Proportional-Stromregel-Ventil 83. Außerdem weist der Steuerblock 81 ein 4/2-Wegeventil 84 auf, das bei einer weiteren, die Zu- bzw. Ableitung 82,85 des Stromregel-Ventils 83 miteinander verbindenden Hydraulikleitung 86 zugeordnet ist. Diese weist außerdem noch ein zweistufiges Druckregel-Ventil 87 auf, das über eine hydraulische Versorgungsleitung 88 bzw. 28 (Fig.1) mit dem Hydraulik-Pumpenaggregat 11 in Verbindung steht. Sämtliche im Steuerblock 81 befindlichen Ventile 80,83,84,87 werden über Leitungen 89 von der am Schweißaggregat 15 befindlichen Steuereinrichtung 77 aus gesteuert. Diese ist außerdem mit einer Hydraulikleitung 90 bzw. 28 (Fig.1) zur Beaufschlagung der beiden Klemm-Zylinder 75 verbunden.

Im folgenden wird die Funktion der erfindungsgemäß ausgebildeten Maschine zum elektrischen Abbrennstumpf-Verschweißen an Hand der Fig.1 bis 8 näher beschrieben.

Sobald die Maschine 1 unter Beendigung der Überstellfahrt einen zu verschweißenden Schienenstoß 44 erreicht hat, werden die zur Fixierung der Schienenverschiebe Vorrichtung 16 dienenden Stangen 36,37 und auch die das Schweißaggregat 15 haltenden Stangen entfernt. Durch Beaufschlagung des als Seilzug ausgebildeten Antriebes 32 wird die Schienenverschiebe-Vorrichtung 16 mitsamt den Antrieben 31 und 34 querverschoben, bis die Vorrichtung 16 symmetrisch über den zu verbindenden Schienenendbereichen 42,43 zu liegen kommt. In diesem schwebenden Zustand werden unter vorheriger Entfernung der entsprechenden Splinte 67 die beiden unteren Jochglieder 62 entfernt. Darauf wird die Schienenverschiebe-Vorrichtung 16 unter Beaufschlagung des Antriebes 34 auf das Gleis 7 bzw. die Schiene 5 aufgelegt, wobei die äußeren Steckbolzen 61 jeweils in einem Schwellenzwischenfach zu liegen kommen. Anschließend werden die beiden gelösten Jochglieder 62 zwischen den Schwellen 6 unter die Schiene 5 geführt und wieder auf die Steckbolzen 61 aufgeschoben und durch Einführen der gelösten Splinte 67 mit diesen verbunden. Die Schienenbefestigungsmittel 45 der in Fig.1 rechten unbelasteten Schiene 5 werden zweckmäßig während des Verschweißens dieses Schienenstranges, vorzugsweise durch einen eigenen Arbeitstrupp bereits gelöst.

Für den Fall, daß der Abstand der beiden Schienenendbereiche 42,43 sehr groß ist, z.B. über 5 cm, so kann die Schienenverschiebe-Vorrichtung 16 vorerst ohne Einsatz des Schweißaggregates 15 zum Heranziehen bzw. -schieben des unbelasteten und den Schienenendbereich 43 aufweisenden Schienenstranges eingesetzt werden. Zu diesem Zweck werden die Antriebszylinder 50 derart beaufschlagt, daß die Kolbenstangen 57 weitestmöglich aus dem Zylinder verschoben sind. Auf diese Weise ist die Distanz der beiden Schienen-Klemmbacken-Paare 47,48 zueinander am größten. Anschließend werden die beiden Antriebszylinder 50 der Gegenrichtung beaufschlagt, wodurch die Klemmhebel 60 unter Anpressen der Schienen-Klemmbacken-Paare 47,48 an den Schienensteg in Richtung zur Schiene 5 verschwenkt werden. Sobald diese geringfügige Verschwenkbewegung beendet ist, erfolgt unter weiterem Einschieben der Kolbenstangen 57 in die Antriebszylinder 50 ein Heranziehen des im Ausführungsbeispiel nach den Fig.1 bis 8 rechten Schienenendbereiches 43, da dieser durch Absenken der Hubstempel 40 vom Fahrwerk 38 und dem Gewicht des Anhängers 18 entlastet ist. Ist der Abstand der beiden Schienenendbereiche zueinander bzw. der Schienenstoß 44 nach Beendigung dieses Schienenziehvorganges noch immer zu groß, kann durch Wiederholung der beschriebenen weitestmöglichen Distanzierung der beiden Klemmbacken-Paare 46,47 zueinander - durch ein Ausschieben der Kolbenstangen 57 aus den Antriebszylindern 50 - ein neuer Schienenzieh- bzw. -schiebevorgang in der durch die Pfeile 91 dargestellten Richtung (Fig.5) eingeleitet werden.

Wahlweise ist es aber auch möglich, z.B. den linken Schienenendbereich 42 gemäß dem strichliert dargestellten Pfeil 92 (Fig.5) zu verschieben. Dazu wird zweckmäßig der Hubstempel 41 - wie mit strichpunktierten Linien in Fig.3 angedeutet - unter Abheben des Fahrwerkes 4 vom Gleis 7 auf die Schwellen abgesenkt. Außerdem sind die entsprechenden Schienenbefestigungsmittel 45 des linken Schienenstranges vorher zu lösen.

Ebenso sind natürlich auch beide Schienenendbereiche 42,43 bei deren Entlastung von den Maschinenfahrwerken gleichzeitig zueinander verschiebbar.

Bereits während des beschriebenen Heranziehens eines Schienenstranges kann das Schweißaggregat 15 unter Beaufschlagung der Antriebe 22 und 23 in die ringförmige Baueinheit 49 der Schienenverschiebe-Vorrichtung 16 eingeführt und auf die beiden Schienenendbereiche 42,43 abgesenkt werden. Nach Anpressen der beiden Klemm- und Schweißbacken-Paare 73,74 an den Schienensteg durch Beaufschlagung der Klemm-Zylinder 75 ist der Schienenverschiebe-Vorgang wahlweise auch gemeinsam vom Schweißaggregat 15 und der Schienenverschiebe-Vorrichtung 16 bzw. auch nur vom Schweißaggregat 15 allein durchführbar. Für eine gemeinsame Übertragung der Zug- bzw. Schubkräfte werden die beiden Hydraulik-Zylinder 76 des Schweißaggregates 15 und die Antriebszylinder 50 der Verschiebe-Vorrichtung 16 über die gemeinsamen Hydraulikleitungen 70,71 (Fig.8) gleichzeitig beaufschlagt.

Der Vor- bzw. Rückschub wird entsprechend einer gewünschten Soll-Geschwindigkeit mit dem hydraulischen Stromregel-Ventil 83 durchgeführt. Dabei erzwingt ein analoges elektrisches Signal einen diesem Signal entsprechenden Ölstrom bzw. Ölmenge. Die Geschwindigkeit der Hydraulik- bzw. Antriebs-Zylinder 76,50 hängt proportional mit dem Volumen des Ölstromes zusammen. Sollten beim Ziehen sehr langer Schienenstränge erhöhte Kräfte erforderlich sein, so können beispielsweise auch mehrere Antriebszylinder 50 parallel zu den Hydraulik-Zylindern 76 des Schweißaggregates 15 geschaltet und die Zugkräfte über weitere Schienen-Klemmbacken-Paare 47,48 auf die Schienen übertragen werden. Die geschlossenen bzw. an den Schienensteg anliegenden Schienen-Klemmbacken-Paare 47,48 und die Klemm- und Schweißbacken-Paare 73,74 bilden mit den Hydraulik- und Antriebs-Zylindern 50,76 eine kompakte, zusammengeschlossene Einheit. Dabei werden die verschiedenen Zylinderkolben alle nur mit der gleichen Geschwindigkeit verschoben. Es genügt daher, über das hydraulische Stromregel-Ventil 83 die Summe des benötigten Hydraulik-Öles zu erzeugen. Entsprechend der für das Hydraulik-Öl wirksamen Fläche der Zylinderkolben teilen sich die Kräfte auf die einzelnen Zylinder 50,76 auf.

Sobald der für den Schweißvorgang erforderliche Abstand der beiden Schienenendbereiche 42,43 erreicht ist, wird der durch die Schweißprozeß-Steuereinrichtung 14 automatisch gesteuerte Schweißvorgang eingeleitet. Dabei werden nach einem genau gesteuerten Programm in Abhängigkeit von der Stromdurchflußmenge die Schienenendbereiche 42,43 geringfügig zu- und voneinanderbewegt, bis die Schienenenden auf Schmelztemperatur erwärmt sind. Als Abschluß des Schweißvorganges werden die beiden Schienenenden im Rahmen eines sogenannten Stauchschlages unter sehr hohen Kräften durch Zuschaltung des Druckregel-Ventiles 87 mit großem Durchflußvermögen aneinandergepreßt. Dabei bildet sich ein Schweißwulst, der von der Abschervorrichtung 78 unmittelbar danach automatisch abgeschert wird. Anschließend wird das Schweißaggregat 15 unter Beaufschlagung des Antriebes 25 wieder hochgehoben. Danach werden die unteren Jochglieder 61 der Schienenverschiebe-Vorrichtung 16 wieder entfernt und die Vorrichtung 16 unter Verbindung der Laschen 66 der Steckbolzen 63,64 mit der als Seil ausgebildeten Aufhängevorrichtung 35 hochgehoben. Danach werden die unteren Jochglieder 62 wieder mit den Steckbolzen 61 verbunden und die Maschine I nach Anhebung der Hubstempel 40 zum nächsten Schienenstoß 44 verfahren.

Wahlweise ist es aber, wie bereits aufgezeigt, auch möglich, die erwähnten geringfügigen Zu- und Voneinanderbewegungen der Schienenenden während des Schweißprozesses allein durch die beiden Hydraulik-Zylinder 76 des Schweißaggregates durchzuführen. In diesem Fall werden die Antriebszylinder 50 der Schienenverschiebe-Vorrichtung 16 für den besonders große Kräfte erfordernden abschließenden Stauchschlag zugeschaltet.

## Patentansprüche

1. Fahrbare Maschine (1) zum elektrischen Abbrennstumpf-Verschweißen der beiden Enden im Verlauf oder im Stoßbereich von in Längsrichtung aneinandergereihten und verlegten Schienen (5) eines Gleises (7), mit an einem über Fahrwerke (4) abgestützten Fahrgestellrahmen (2) der Maschine (1) angeordnetem Antriebsmotor (10), Hydraulik-Pumpenaggregat (11), Generator (12), Fahrantrieb (8) und Schweißprozeß-Steuereinrichtung (14) und einem zur Bearbeitung des linken oder rechten Schienenstranges über Antriebe quer- und höhenverstellbaren elektrischen Abbrennstumpf-Schweißaggregat (15), dessen beide mittels Hydraulik-Zylinder (76) in Schienenlängsrichtung zueinanderbewegbare Aggregat-Hälften jeweils ein - über hydraulische Klemm-Zylinder (75) verbundenes-elektrisch/hydraulisch beaufschlagbares Klemm- und Schweißbacken-Paar (73,74) aufweisen, sowie gegebenenfalls mit einer im Schweißaggregat ((15) integrierten, hydraulisch beaufschlagbaren Schweißwulst-Abschervorrichtung, **dadurch gekennzeichnet,** daß dem Abbrennstumpf-Schweißaggregat (15) eine Schienen-Zieh- bzw. -Verschiebevorrichtung (16) zugeordnet ist, die zur das Schweißaggregat (15) in der Arbeitsposition in Schienen-Horizontalebene (65) umfassenden Anordnung vorgesehen ist und wenigstens zwei - zum Angriff des unmittelbar vor und hinter dem Schweißaggregat (15) angrenzenden Schienenendbereiches(42,43) vorgesehene und über eine in Längsrichtung der Vorrichtung (16) verlaufende Hydraulik-Zylinder-Kolben-Anordnung (46) beaufschlagbare und mit dieser miteinander verbundene - Schienen-Klemmbacken-Paare (47,48) aufweist.

2. Maschine nach Anspruch 1, dadurch gekennzeichnet, daß die - als ringförmige, mechanische Baueinheit (49) ausgebildete und mit jeweils zur Anordnung - in Schienenlängsrichtung gesehen - links und rechts des Schienenstobes (44) verlaufenden, hydraulischen Antriebszylinder (50) versehene - Schienenverschiebe-, insbesondere Schienenzieh-Vorrichtung (16) einen inneren Querschnitt mit lichter Innenbreite (B) und lichter Innenlänge (L) aufweist, der - zur umfassenden Aufnahme des Schweibaggregates (15) in Schienen-Horizontalebene (65) - gröber ist als der durch den Umfang der maximal voneinander verstellten beiden Schweißaggregat-Hälften (51, 52) gebildete Querschnitt mit dessen Breite (b) und Länge (l).

3. Maschine nach Anspruch 1 oder 2, dadurch gekennzeichnet, daß die beiden, jeweils zur Anordnung links und rechts eines Schienenstranges (5) vorgesehenen hydraulischen Antriebszylinder (50) der hydraulischen Kolben-Zylinder-Anordnung (46) der Schienenverschiebe-Vorrichtung (16) für eine gemeinsame in Schienen-Horizontalebene und in Schienenlängsrichtung wirkende Zug- bzw. Verschiebekraft von mehr als 120 t - vorzugsweise etwa 130 t - ausgebildet sind.

4. Maschine nach einem der Ansprüche 1 bis 3, dadurch gekennzeichnet, daß die beiden, über die Antriebszylinder (50) und den zugeordneten Kolbenstangen (57) beaufschlagbaren Klemmbacken-Paare jeweils durch eine kniehebel- bzw. exzenterartig wirkende Klemmhebelanordnung (59) gebildet sind.

5. Maschine nach einem der Ansprüche 1 bis 4, dadurch gekennzeichnet, daß die Schienenverschiebe-Vorrichtung (16) in ihrer Längsrichtung aus zwei elektrisch voneinander isolierten, hintereinander angeordneten und jeweils symmetrisch zur Längs-Symmetrieebene der Vorrichtung (16) angeordneten Abschnitten (54,55) gebildet ist, die lediglich über eine elektrische Isolierungsschichte (56) miteinander fest, insbesondere jeweils über eine Schraubverbindung verbunden sind.

6. Maschine nach Anspruch 5, dadurch gekennzeichnet, daß die elektrische Isolierungsschichte (56) jeweils in einem mit der Klemmbacke (47) und der Kolbenstange (57) des entsprechenden Antriebszylinders (50) verbundenen und in Zug- bzw. Schublängsrichtung verlaufenden Zugglied (58) quer zu dessen Längsrichtung verlaufend angeordnet ist.

7. Maschine nach einem der Ansprüche 1 bis 6, dadurch gekennzeichnet, daß die Antriebszylinder (50) für die beiden Klemmbacken-Paare (47,48) der Schienenverschiebe-Vorrichtung (16) und die Hydraulik-Zylinder (76) für die Längsverschiebung der beiden Aggregat-Hälften mit den Klemm- und Schweißbacken-Paaren (73,74) des Schweißaggregates mit einer gemeinsamen hydraulischen Antriebsquelle bzw. dem Hydraulik-Pumpenaggregat (11) der Maschine (1) verbunden sind.

8. Maschine nach Anspruch 7, dadurch gekennzeichnet, daß die beiden Klemmbacken-Paare (47,48) und die beiden Klemm- und Schweißbacken-Paare (73,74) über ihre jeweiligen hydraulischen Antriebs- bzw. Hydraulik-Zylinder (50,76) und die Steuereinrichtung (14,77) für eine gemeinsame Schweißprozeß-Steuerung beaufschlagbar sind.

9. Maschine nach einem der Ansprüche 1 bis 8, dadurch gekennzeichnet, daß die mit den Klemmbacken-Paaren (47,48) verbundenen Antriebszylinder (50) und die zur Längsverschiebung der beiden Hälften (51,52) des Schweißaggregates (15) ausgebildeten Hydraulik-Zylinder (76) über Hydraulikleitungen (71,72) parallel geschaltet sind und mit einem Steuerblock (81) der Steuereinrichtung (14) in Verbindung stehen, der ein 4/3-Wegeventil (80), ein hydraulisches Stromregel-Ventil (83) und ein mit einem 4/2-Wegeventil (84) verbundenes Druckregel-Ventil (87) aufweist, wobei das 4/2-Wegeventil (84) einer weiteren, die Zu- bzw. Ableitung (82,85) des Stromregel-Ventiles (83) miteinander verbindenden Hydraulikleitung (86) zugeordnet ist.

10. Maschine nach einem der Ansprüche 1 bis 9, dadurch gekennzeichnet, daß das hydraulische Stromregel-Ventil (83) zur Änderung des durch die mit den Klemmbacken (47,48) und mit den Schweißaggregat-Hälften (51,52) verbundenen Antriebs- bzw. Hydraulik-Zylinder (50,76) fließenden Ölstromes ausgebildet und mit der Steuereinrichtung (14) - für eine Änderung der Kolben- bzw. Schienenverschiebe-Geschwindigkeit - über eine elektrische Leitung (79) zur Aufnahme eines analogen elektrischen Signales an Hand des jeweiligen Schweißprozeß-Programmes verbunden ist.

11. Maschine nach einem der Ansprüche 1 bis 10, dadurch gekennzeichnet, daß die, dem über Antriebe (22,23,25) quer-, höhen- und längsverstellbaren Abbrennstumpf-Schweißaggregat (15) der Maschine (1) in Arbeitsrichtung vorgeordnete Schienenverschiebe-Vorrichtung (16) mit den beiden über die Hydraulik-Zylinder-Kolben-Anordnung (46) verbundenen Klemmbacken-Paaren (47,48) mit an der Maschine vorgesehenen Antrieben (31,32,34) zur Quer-, Höhen- und Längsverstellung verbunden ist.

12. Maschine nach Anspruch 11, dadurch gekennzeichnet, daß das Schweißaggregat (15) und die Schienenverschiebe-Vorrichtung (16) mit ihren Antrieben (23,25,31,32,34) an einem über ein Fahrwerk (38) abgestützten Anhänger (18) der Maschine vorgesehen ist, wobei das Schweißaggregat an einem zentralen und am Fahrgestellrahmen (2) gelenkig gelagerten, brückenförmig ausgebil deten Maschinenrahmen (19) des Anhängers (18) angeordnet und über Längs- und Querführungen (20,21) durch Hydraulik-Antriebe (22,23) längs- und querverstellbar und über einen Hydraulik-Zylinder (25) mittels einer Aufhängevorrichtung (26) höhenverstellbar ausgebildet ist und daß die Schienenverschiebe-Vorrichtung (16) vorzugsweise im Bereich einer Kabine (29) des Anhängers über einen teleskopförmig ausfahrbaren und über einen Antrieb (34) um eine Querführung (33) verschwenkbar gelagerten Hydraulik-Ausleger (31), mittels einer Aufhängevorrichtung (35) quer-, längs- und höhenverstellbar ausgebildet ist.

13. Maschine nach Anspruch 11 oder 12, dadurch gekennzeichnet, daß der Anhänger (18) mit seinem als schienengebundene und mit Spurkranzrädern versehene Fahrachse ausgebildeten Fahrwerk (38) mittels auf den Schwellen und/oder am Schotterbett (39) aufsetzbarer, hydraulisch beaufschlagbarer Hubstempel (40) - zur Schienenentlastung - höhenverstellbar ausgebildet ist.

14. Maschine nach einem der Ansprüche 1 bis 13, dadurch gekennzeichnet, daß die beiden - in Gleislängsrichtung verlaufend angeordneten Antriebszylinder (50) der als ringförmige Baueinheit (49) ausgebildeten Schienenverschiebe- insbesondere Schienenzug-Vorrichtung (16) mit Anschlüssen (69,70) für eine hydraulische Beaufschlagung über flexible Hydraulikleitungen (71,72) von der gemeinsamen, am Fahrgestellrahmen (2) der Maschine (1) angeordneten Antriebsquelle bzw. des Hydraulik-Pumpenaggregates (11) ausgebildet ist.

## Claims

1. A mobile machine (1) for the electrical flash butt welding of the two adjoining or abutting ends of rails (5) of a track (7) arranged and laid consecutively in the longitudinal direction, comprising a drive motor (10), hydraulic pump assembly (11), generator (12), axle drive (8) and welding control unit (14) arranged on a frame (2) of the machine (1) mounted on undercarriages (4); an electrical flash butt welding unit (15) which is designed for transverse and vertical adjustment under the power of drives for working on the left-hand or right-hand rail and of which the two halves, designed for movement relative to one another longitudinally of the rails by means of hydraulic cylinders (76), each comprise a pair (73,74) of electrically/hydraulically operable clamping and welding jaws connected by hydraulic clamping cylinders (75); and, optionally, a hydraulically operable weld bead shearing unit integrated with the welding unit (15), characterized in that a rail pulling and shifting unit (16) is associated with the flash butt welding unit (15), being designed for arrangement around the welding unit (15) in the working posit in the horizontal plane (65) of the rail and comprising at least two pairs (47,48) of rail clamping jaws designed for application to the rail end (42,43) immediately adjoining the welding unit (15) in front of and behind it and which are operable by and joined together by a hydraulic cylinder-and-piston assembly (46) extending longitudinally of the unit (16).

2. A machine as claimed in claim 1, characterized in that that the rail shifting, more particularly rail pulling, unit (16) in the form of an annular mechanical unit (49) provided with hydraulic drive cylinders (50) designed to be arranged on the left and right of the rail joint (44) (longitudinally of the rail) has an internal cross-section with an internal width (B) and internal length (L) which, for arrangement around the welding unit (15) in the horizontal plane (65) of the rail, is larger than the cross-section with its width (b) and length (l) formed by the circumference of the two halves (51,52) of the welding unit spaced maximally apart from one another.

3. A machine as claimed in claim 1 or 2, characterized in that the two hydraulic drive cylinders (50) - respectively designed for arrangement on the left and right of a rail (5) - of the hydraulic piston-and-cylinder assembly (46) of the rail shifting unit (16) are designed for a common pulling or pushing force active in the horizontal plane of the rail and longitudinally thereof of more than 120 t and preferably of the order of 130 t.

4. A machine as claimed in any of claims 1 to 3, characterized in that the two pairs of clamping jaws operable by way of the drive cylinders (50) and the associated piston rods (57) are each formed by a toggle-action or eccentricaction clamping lever arrangement (59).

5. A machine as claimed in any of claims 1 to 4, characterized in that the rail shifting unit (16) is formed in its longitudinal direction of two sections (54,55) arranged one behind the other which are electrically insulated from one another and are each arranged symmetrically to the longitudinal plane of symmetry of the unit (16), being joined firmly to one another solely with a layer (56) of electrical insulation in between, more particularly by a screw connection.

6. A machine as claimed in claim 5, characterized in that the layer (56) of electrical insulation is arranged in, and extends transversely of the longitudinal axis of, a tension member (58) connected to the clamping jaw (47) and to the piston rod (57) of the corresponding drive cylinder (50) and extending longitudinally of the pushing or pulling direction.

7. A machine as claimed in any of claims 1 to 6, characterized in that the drive cylinders (50) for the two pairs (47,48) of clamping jaws of the rail shifting unit (16) and the hydraulic cylinders (76) for the longitudinal shifting of the two halves of the welding unit are connected with the pairs (73,74) of clamping and welding jaws of the welding unit to a common hydraulic drive source or to the hydraulic pump assembly (11) of the machine (1).

8. A machine as claimed in claim 7, characterized in that the two pairs of clamping jaws (47,48) and the two pairs of clamping and welding jaws (73,74) are designed to be operated through their respective hydraulic drive cylinders or hydraulic cylinders (50,76) and the control unit (14,77) for common control of the welding process.

9. A machine as claimed in any of claims 1 to 8, characterized in that the drive cylinders (50) connected to the pairs (47,48) of clamping jaws and the hydraulic cylinders (76) designed for longitudinally shifting the two halves (51,52) of the welding unit (15) are connected in parallel by hydraulic lines (71,72) and communicate with a control block (81) of the control unit (14) which comprises a 4/3-way valve (80), a hydraulic flow control valve (83) and a pressure control valve (87) connected to a 4/2-way valve (84), the 4/2-way valve (84) being associated with another hydraulic line (86) which connects the inlet and outlet (82,85) of the flow control valve (83) to one another.

10. A machine as claimed in any of claims 1 to 9, characterized in that the hydraulic flow control valve (83) is designed to alter the flow of oil through the drive or hydraulic cylinders (50,76) connected to the clamping jaws (47,48) and to the halves (51,52) of the welding unit and to change the piston speed or rail shifting speed - is connected to the control unit (14) by an electrical lead (79) to receive an analog electrical signal relating to the particular welding program.

11. A machine as claimed in any of claims 1 to 10, characterized in that the rail shifting unit (16) which precedes the transversely, vertically and longitudinally adjustable (<u>via</u> drives 22,23,25) flash butt welding unit (15) of the machine (1) in the working direction, with the two pairs (47,48) of clamping jaws connected by the hydraulic cylinder-and-piston assembly (46), is connected to drives (31,32,34) provided on the machine for transverse, vertical and longitudinal adjustment.

12. A machine as claimed in claim 11, characterized in that the welding unit (15) and the rail shifting unit (16) are arranged with their drives (23,25,31,32,34) on an undercarriage (38)-mounted trailer (18) of the machine, the welding unit being arranged on a central bridge-like machine frame (19) of the trailer (18) pivotally mounted on the welding machine frame (2) and being designed for longitudinal and transverse adjustment under the power of hydraulic drives (22,23) <u>via</u> longitudinal and transverse guides (20,21) and for vertical adjustment by means of a suspension unit (26) <u>via</u> a hydraulic cylinder (25) and in that the rail shifting unit (16) is designed for transverse, longitudinal and vertical adjustment by means of a suspension unit (35), preferably in the region of a cabin (29) of the trailer, <u>via</u> a telescopically extendable hydraulic jib (31) mounted to pivot about a transverse guide (33) under the power of a drive (34).

13. A machine as claimed in claim 11 or 12, characterized in that the trailer (18) with its on-track undercarriage (38) in the form of a drive axle provided with flanged wheels is designed for vertical adjustment - to relieve the rail of load - by means of hydraulically operated jacks (40) designed to be placed on the sleepers and/or on the ballast bed (39).

14. A machine as claimed in any of claims 1 to 13, characterized in that the two drive cylinders (50) - extending longitudinally of the track - of the rail shifting and, more particularly, rail pulling unit (16) in the form of an annular unit (49) are provided with connections (69,70) for hydraulic activation via flexible hydraulic lines (71,72) by the common drive source or hydraulic pump assembly (11) arranged on the frame (2) of the machine (1).

**Revendications**

1. Machine roulante (1) pour le soudage électrique bout à bout par étincelage des deux extrémités dans le cours ou dans le joint bout à bout de rails (5) d'une voie ferrée (7) juxtaposés en file et posés en direction longitudinale, avec un moteur d'entraînement (10), un groupe à pompe hydraulique (11), un générateur (12), un dispositif de commande motrice de locomotion (8) et un système de pilotage de processus de soudage (14) montés sur un châssis de véhicule roulant (2) de la machine (1) supporté par l'intermédiaire de trains de roulement (4) et avec un appareil de soudage électrique bout à bout par étincelage (15) déplaçable transversalement et en hauteur par l'intermédiaire de dispositifs de commande pour le traitement de la file de rails de gauche ou de droite, dont les deux moitiés d'appareil, mobiles l'une par rapport à l'autre en direction longitudinale des rails au moyen de vérins hydrauliques à cylindre (76), comportent respectivement une paire de mâchoires de serrage et de soudage (73, 74) reliées par l'intermédiaire de vérins hydrauliques à cylindre de serrage (75) et pouvant être sollicitée électriquement/hydrauliquement ainsi qu'éventuellement avec un dispositif de cisaillement de bourrelet de cordon de soudage intégré à l'appareil de soudage (15) et pouvant être sollicité hydrauliquement, caractérisée en ce qu'à l'appareil de soudage bout à bout par étincelage (15) est associé un dispositif

EP 0 326 793 B1

de tirage ou de déplacement de rails (16) qui est prévu pour l'agencement entourant l'appareil de soudage (15) dans la position de travail dans le plan horizontal des rails (65) et comporte au moins deux paires de mâchoires de serrage de rail (47, 48) prévues pour l'attaque de la portion extrême de rail (42, 43) immédiatement adjacente devant et derrière l'appareil de soudage (15) et pouvant être sollicitées par l'intermédiaire d'un système de vérins hydrauliques à cylindre et à piston (46) s'étendant en direction longitudinale du dispositif (16) et reliées entre elles par celui-ci.

2. Machine selon la revendication 1, caractérisée en ce que le dispositif de déplacement de rails et en particulier de tirage de rails (16), réalisé sous forme d'unité de construction mécanique annulaire (49) et pourvu de vérins hydrauliques de commande à cylindre (50) s'étendant respectivement pour l'agencement, vu en direction longitudinale des rails, à gauche et à droite du joint de rails (44), comporte une section transversale intérieure à largeur interne libre (B) et à longueur interne libre (L), laquelle, pour le logement de réception entourante de l'appareil de soudage (15) dans le plan horizontal des rails (65), est plus grande que la section transversale avec ses largeur (b) et longueur (l) formée par la périphérie des deux moitiés d'appareil de soudage (51, 52) maximalement décalées l'une de l'autre.

3. Machine selon la revendication 1 ou 2, caractérisée en ce que les deux vérins hydrauliques de commande à cylindre (50) du système de vérins hydrauliques à piston et à cylindre (46) du dispositif de déplacement de rails (16), respectivement prévus pour l'agencement à gauche et à droite d'une file de rails (5), sont réalisés pour une force de traction ou de déplacement commune de plus de 120 t et de préférence d'environ 130 t agissant dans le plan horizontal des rails et en direction longitudinale des rails.

4. Machine selon l'une des revendications 1 à 3, caractérisée en ce que les deux paires de mâchoires de serrage, pouvant être sollicitées par l'intermédiaire des vérins de commande à cylindre (50) et des tiges de piston associées (57), sont constituées respectivement par un système de leviers de serrage (59) agissant à la façon de leviers de la genouillère ou d'excentriques.

5. Machine selon l'une des revendication 1 à 4, caractérisée en ce que le dispositif de déplacement de rails (16) se compose de deux portions (54, 55) électriquement isolées l'une de l'autre, disposées l'une derrière l'autre et respectivement montées symétriquement par rapport au plan longitudinal de symétrie du dispositif (16) et lesquelles sont fixement reliées entre elles par l'intermédiaire d'une couche d'isolation électrique (56), en particulier respectivement par l'intermédiaire d'une liaison à vis.

6. Machine selon la revendication 5, caractérisée en ce que la couche d'isolation électrique (56) est disposée dans un organe de traction (58) en s'étendant transversalement à la direction longitudinale de celui-ci, lequel est relié à la mâchoire de serrage (47) et à la tige de piston (57) du vérin de commande à cylindre correspondant (50) et s'étend en direction longitudinale de traction et de poussée.

7. Machine selon l'une des revendications 1 à 6, caractérisée en ce que les vérins de commande à cylindre (50) , pour les deux paires de mâchoires de serrage (47, 48) du dispositif de déplacement de rails (16) et les vérins hydrauliques à cylindre (76) pour le déplacement longitudinal des deux moitiés d'appareil avec les paires de mâchoires de serrage et de soudage (73, 74) de l'appareil de soudage sont reliés à une source hydraulique de commande commune ou au groupe à pompe hydraulique (11) de la machine (1).

8. Machine selon la revendication 7, caractérisée en ce que les deux paires de mâchoires de serrage (47, 48) et les deux paires de mâchoires de serrage et de soudage (73, 74) peuvent être sollicitées par leurs vérins hydrauliques de commande et vérins hydrauliques à cylindre, (50, 76) respectifs et par le système de pilotage (14, 77) pour un pilotage en commun du processus de soudage.

9. Machine selon l'une des revendications 1 à 8, caractérisée en ce que les vérins de commande à cylindre (50), reliés aux paires de mâchoires de serrage (47, 48) et les vérins hydrauliques à cylindre (76) réalisés pour le déplacement longitudinal des deux moitiés (51, 52) de l'appareil de soudage (15), sont branchés en parallèle par l'intermédiaire de conduites hydrauliques (71, 72) et sont en communication avec un bloc de pilotage (81) du système de pilotage (14), lequel comporte une vanne distributrice à 4/3 voies (80), une valve de réglage de courant hydraulique (83) et une vanne de réglage de pression (87) reliée à une vanne distributrice à 4/2 voies (84), la vanne distributrice à 4/2 voies (84) étant associée à une autre conduite hydraulique (86) reliant, entre elles, les conduites d'arrivée et de départ (82, 85) de la vanne de réglage de courant (83).

10. Machine selon l'une des revendications 1 à 9, caractérisée en ce que la vanne de réglage de courant hydraulique (83)est réalisée pour la variation du courant d'huile s'écoulant à travers les vérins de commande et vérins hydrauliques à cylindre (50, 76) reliés aux mâchoires de serrage (47, 48) et aux moitiés d'appareil de soudage (51, 52) et est reliée au système de pilotage (14), pour une variation de la vitesse de piston ou de déplacement de rails, par l'intermédiaire d'une canalisation électrique (79) pour la réception d'un signal électrique analogique à l'aide du programme actuel de processus de-soudage.

11. Machine selon l'une des revendications 1 à 10, caractérisée en ce que le dispositif de déplacement de rails (16), avec les deux paires de mâchoires de serrage (47, 48) reliées par l'intermédiaire du système de vérins hydrauliques à cylindre et à piston (46) , placé, dans le sens de travail, devant l'appareil de soudage

**14**

bout à bout par étincelage (15) de la machine (1) , déplaçable transversalement, en hauteur et longitudinalement par l'intermédiaire de dispositifs d'entraînement (22, 23, 25), est relié à des dispositifs de commande (31, 32, 34) prévus sur la machine pour le déplacement transversal, en hauteur et longitudinal.

12. Machine selon la revendication 11, caractérisée en ce que l'appareil de soudage (15) et le dispositif de déplacement de rails (16) avec leurs dispositifs d'entraînement (23, 25, 31, 32, 34) sont prévus sur une remorque (18) de la machine supportée par l'intermédiaire d'un train de roulement (38), l'appareil de soudage étant disposé sur un bâti de machine central (19) de la remorque (18), monté de façon articulée sur le châssis de véhicule roulant (2) et réalisé en forme de pont et est réalisé de façon à être déplaçable longitudinalement et transversalement par des dispositifs hydrauliques de commande (22, 23) par l'intermédiaire de guidages longitudinaux et transversaux (20, 21) et de façon à être déplaçable en hauteur par l'intermédiaire d'un vérin hydraulique à cylindre (25) au moyen d'un dispositif de suspension (26) et en ce que le dispositif de déplacement de rails (16) est réalisé, de préférence au voisinage d'une cabine (29) de la remorque, de façon à être déplaçable transversalement, longitudinalement et en hauteur par l'intermédiaire d'un bras en porte-à-faux hydraulique (31) télescopiquement extensible et monté de façon à pouvoir pivoter autour d'un guidage transversal (33) par l'intermédiaire d'un dispositif de commande (34) et au moyen d'un dispositif de suspension (35).

13. Machine selon la revendication 11 ou 12, caractérisée en ce que la remorque (18), avec son train de roulement (38) réalisé sous forme d'essieu de roulement lié aux rails et pourvu de roues à boudin, est réalisée de façon à être déplaçable en hauteur pour la décharge des rails au moyen de poinçons élévateurs (40) pouvant être posés sur les traverses et/ou sur le lit de ballast (39)et pouvant être sollicités hydrauliquement.

14. Machine selon l'une des revendication 1 à 13, caractérisée en ce que les deux vérins de commande à cylindre (50), disposés de façon à s'étendre en direction longitudinale de la voie ferrée, du dispositif de déplacement de rails et en particulier de tirage de rails (16) réalisé sous forme d'unité de construction annulaire (49), sont réalisés avec des raccords (69, 70) pour une sollicitation hydraulique, par l'intermédiaire de conduites hydrauliques flexibles (71, 72) depuis la source de commande ou -le groupe à pompe hydraulique (11) commun monté sur le châssis de véhicule roulant (2) de la machine (1).

Fig.1

Fig.2

Fig.3

Fig.6

Fig.4

Fig.5

# Fig.7

# Fig.8